# EUROPEAN PATENT SPECIFICATION

(11) **EP 0 686 242 B1**
(45) Date of publication and mention of the grant of the patent: **15.04.1998**
(21) Application number: 94908536.9
(22) Date of filing: 10.02.1994
(51) Int. Cl.: F16K 37/00

(54) **VALVE WHEEL**
VENTILRAD
VOLANT POUR VANNE

(30) Priority: 25.02.1993 SE 9300642
(43) Date of publication of application: 13.12.1995
(73) Proprietor: Tour & Andersson Hydronics Aktiebolag, 520 30 Ljung (SE)
(72) Inventor: LENBERG, Lars, S-465 00 Nossebro (SE)
(74) Representative: Siebmanns, Hubertus
(86) International application number: PCT/SE94/00106
(87) International publication number: WO 94/19636

(56) References cited:
- DE-B- 1 775 594
- SE-B- 448 651

## Description

The present invention relates to a wheel of the type which is set forth in the preamble of patent claim 1.

Such wheels or handles are used e.g. as valve parts to adjust heating systems etc.

Document SE-B-448 651 relates to a valve wheel having means designed to indicate the position of a valve body. However, said means allow only a very limited number of turns and in addition the position indication may result in an unclear reading, particularly within the transition area to a new full turn. Also, a certain inconvenience is experienced, since the position indicating means for full turns and portions of a turn mutually rotate in the same direction but are disassociated from each other. The latter inconvenience shows itself in that the windows for the respective indications are separated.

The objects of the present invention is to counter-act and remove as much as possible these inconveniences and develop a new wheel according to a new position indicating principle, which allows a large capacity range and a quick and clear reading in any position.

These objects are realized by designing in accordance with the present invention a wheel or handle of the type set forth in the introduction, mainly in the way set forth in the characterizing clause of patent claim 1.

Additional characterizing features and advantages of the invention are explained in the following description, reference being made to the enclosed drawings, which in detail show a few only exemplifying embodiments:

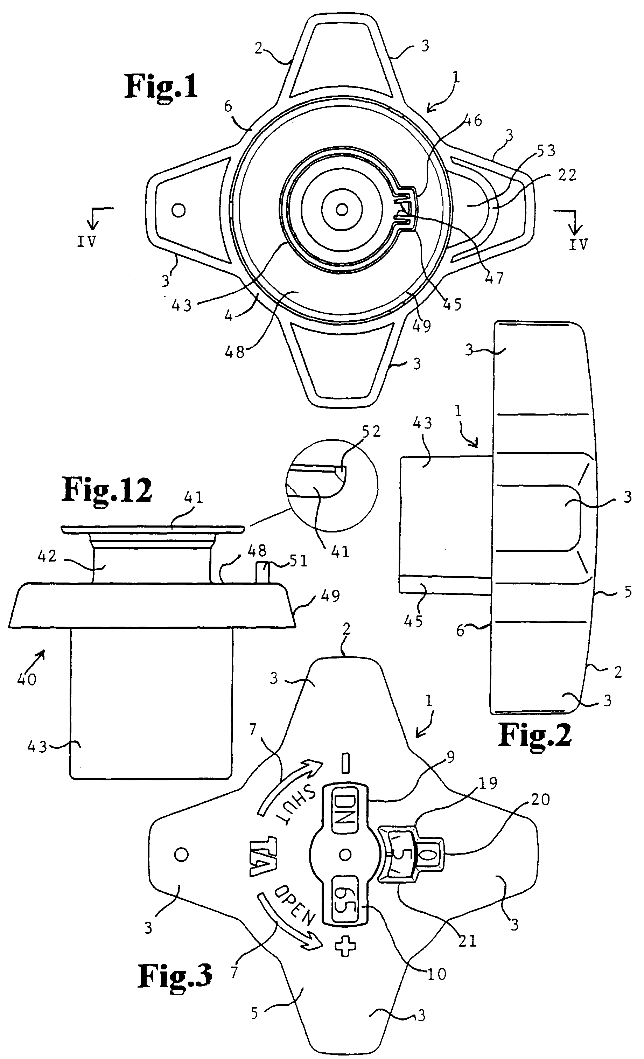

Figure 1 a planar view from below of a wheel according to the invention;
Figure 2 a view from above in figure 1;
Figure 3 a planar view from above of the wheel according to figures 1 and 2;

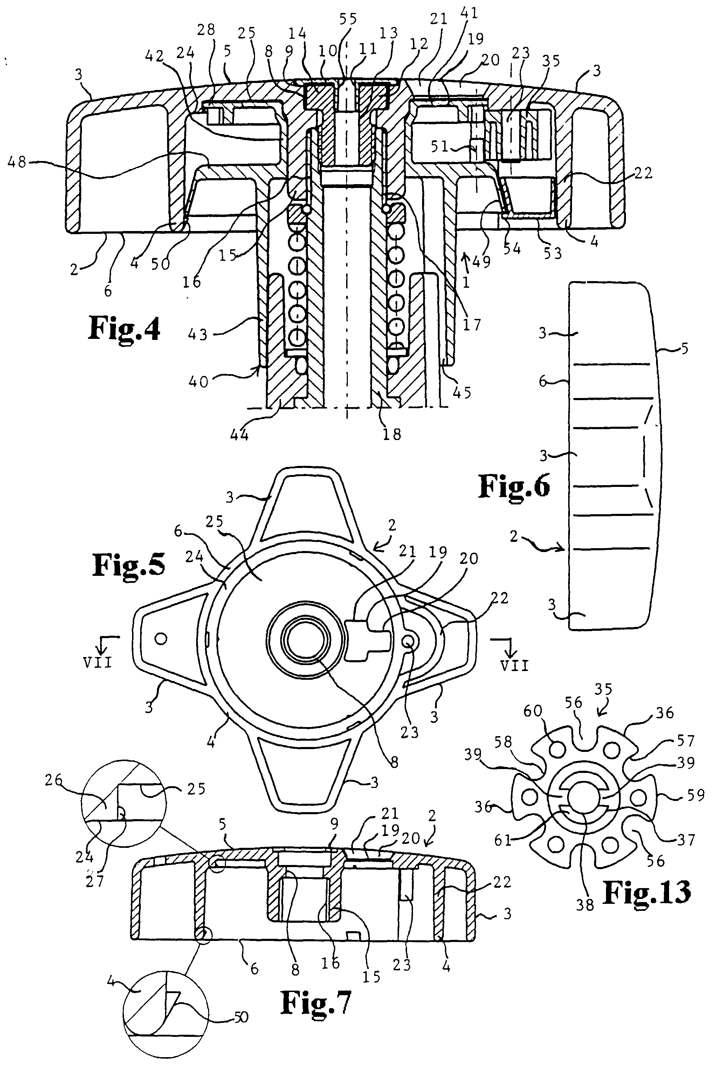

Figure 4 a diametrical section view along line IV-IV in figure 1;
Figure 5 a view which corresponds to figure 1 but only of the wheel house;
Figure 6 a view from above in figure 5;
Figure 7 a section view along line VII-VII in figure 5;

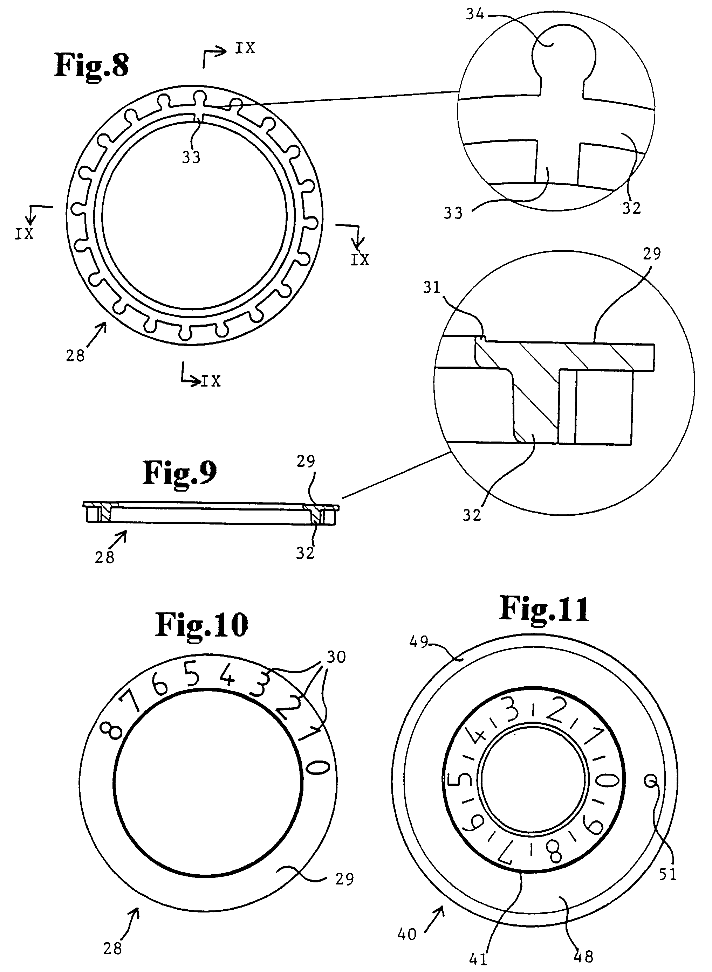

Figure 8 a planar view from below of a digit ring, mounted in the wheel according to figures 1-4;
Figure 9 a diagrammatical sectional view along line IX-IX in figure 8;
Figure 10 a planar view from above of the digit ring according to figures 8 and 9;
Figure 11 a planar view of a decimal ring, mounted in the wheel according to figures 1-10;
Figure 12 a side view of the decimal ring according to figure 11; and
Figure 13 a planar view from above of an intermediate wheel, mounted in the wheel according to figures 1-4.

In the drawings a wheel 1 according to the invention is shown in its entirety. A wheel house 2 suitably is made by injection molding a plastic material or die-casting aluminum. The house preferably is star-shaped with four blunt wings 3 and a mainly circularly cylindrical casing 4, which connects the bases of the wings with each other. The wings and the casing extend axially from face 5 of the house to its back 6, which is open. Consequently, the interior of the casing and the wings is hollow.

On face 5 of the house use symbols 7 suitably have been stamped in connection with the manufacture as well as around a central bore 8 e.g. a recess 9 to insert a marking plate 10, which by means of a pin 11 is to be fastened in a spindle screw 12 by friction securing in a bore 13 in screw head 14. Pin 11 suitably also has an axial through bore 55 to introduce a tool (not shown), by means of which the valve can be set in advance without a disassembly.

The central bore is concentricly surrounded by a hub 15, which in the axial direction suitably is somewhat shorter than the wings and the casing and has a continuous inner grooving or the like 16, which fits a corresponding outer grooving or the like 17 on a spindle end 18 in order to prevent a relative rotation between these parts.

Between the base of a wing and hub 15 an axial through recess 19 is provided in the face of the wheel house, which recess is subdivided into a window 20 for an indication of full turns and a window 21 for portions of a turn. The recess preferably is T-shaped, the vertical portion of the T forming the window 20 and the cross portion of the T forming window 21, in which an indication of a larger measuring range is required.

Said wing base, which is radially connected to said recess, is not limited like the rest of the wing bases by a arc-shaped casing portion, but the casing is within this area inserted in said wing to principally follow the wing sides roughly parallelly at a distance therefrom and to subsequently form approximately a quarter-circle 22 having an axial pin 23 as its center of curvature, which axial pin projects outwards from the rear side of the face of the house from an area close to the intended circular extension of the casing and has a length, which approximately is the same as half the length of the casing.

In bottom surface 24 of the area, which is enclosed by the casing, a recess 25 is concentrically made about hub 15 and leaves a narrow shoulder 26 adjacent the casing. From the free edge, which delimits the shoulder laterally, e.g. three holding lugs 27, arranged at the same mutual angular distance from each other, project into the recess and are designed to retain a digit ring 28, inserted into the recess, which ring is so narrow, that it solely covers window 20 in radial direction. Surface 29, which is exposed to this window, is provided with digits 30, which correspond to the number of turns to be indicated, in the circumferential direction of the ring. Said surface 29 suitably is delimited at its inner edge by an axially outstanding spacer edge 31 all around, which is designed to distance the surface from the bottom of the recess and prevent/counteract in this way, that the digits are worn off.

On the other side of digit ring 28 a ring 32, which is somewhat distanced from the inner edge and substantially from the outer edge, projects axially, from which ring in a place suitably corresponding to the 0-adjustment a positioning shoulder 33 projects radially inwards, by means of which shoulder said ring can be allowed to occupy the required starting position, when the ring is mounted in the wheel house. Cogs 34 project radially outwards from ring 32 at even intervals and can roughly have a cylindrical shape axially with a uniform link to the outer ring portion and a termination in axial direction at the level of the free axial end of ring 32. In radial direction the cogs can, through approximately a quarter of their radial range, be uniformly connected to ring 32.

Digit ring 28 and an intermediate wheel 35 interact and the latter is rotatively mounted on axial pin 23 and is supported with its zone of contact on the outer portion of the digit ring. The intermediate wheel forms with the digit ring a substantial supplementary shape, which in this case is achieved i.a. by designing the spaces 56 between adjacent cogs 36 as inner semi-cylinders 58 having straight wall extensions 57 outwards and by letting periphery 59 and the wheel essentially follow a cylinder surface, the space between two adjacent cogs of the digit ring in this way always being filled maximally and in this way omissions during the interaction between the digit ring and the intermediate wheel being excluded also after some wear. Intermediate wheel cogs 36 suitably are provided with central axial through holes 60, which save material as well as guarantee to a large extent shape stability, deviating sunken thicker portions being counteracted. The intermediate wheel is provided with a concentric inner substantially cylinder ring-shaped hole 37, which leaves a bottom 61 at one of the axial ends of the wheel about a pin hole 38. From the inner edge of said bottom 38 two opposite holding shoulders 39 project axially outwards into hole 37, which shoulders at least at their free ends have a smaller mutual distance than the pin diameter, so that a friction locking of the intermediate wheel on the pin can be achieved.

A decimal ring 40 abuts bottom surface 24 inside the digit ring with a flange 41, which projects outwards in radial direction from one of the ends of a guide cylinder 42, which in axial direction is connected to a concentric sleeve 43 with a larger diameter. This sleeve is designed to be slipped onto a protruding top portion 44 of the valve and be secured on this top portion against a relative rotation by providing it with a projection 45 in a tongued and grooved-fashion and in radial direction, which projection can be provided with axial springs 47, which are projecting radially inwards from web 46 of the projection and designed to allow tolerances.

The transition area between the guide cylinder and the sleeve coincides with a flange 48, which in radial direction projects above the sleeve and the projection and suitably is surrounded by a resilient collar 49, which projects with an angle of preferably about 15° in relation to the longitudinal axis and opens outwards from the flange, which in its mounted position is depressed within the casing space. The collar is designed to resiliently snap in below a few locking shoulders 50 at the inner side of the free end of the casing and in this way fasten all the main components of the wheel, namely the house, the digit ring, the intermediate wheel and the decimal ring against each other.

From a location close to the periphery of the flange a driving pin 51 projects from the flange outwards in axial direction and is designed to mesh with a cog space in the intermediate wheel, when this is passed, and in this way to rotate this wheel one graduation, which rotational movement is translated to the digit ring, which is rotated a corresponding graduation in order to indicate a higher or lower entire turn.

Flange 41 is on its free end surface provided with a numbering all around, which usually comprises the digits 0-9, which correspond to ten decimals of an entire turn. Also, flange 41 is like the digit ring provided with a preferably outer spacer ring 52 all around, which prevents/counteracts a wearing off of the indicating surface.

The open area between the casing and the collar outside the intermediate wheel can be covered by a shape-complementary protective device 53, which by means of a small flange 54 as an insertion delimitation can abut the collar.

The wheel according to the present invention is to be mounted on e.g. a valve top piece and to be fastened by means of a screw having the design described above.

The functioning of such a wheel or handle is simple and easy to understand. Subsequent to a preliminary adjustment or setting of the valve body in the way described above the wheel house 2 is turned e.g. in counter-clockwise direction in order to open up the valve, i.e. to remove the valve body from its matching seat. Each entire turn of the rotation of the wheel is indicated in window 20 and a decimal of each turn in window 21. This is accomplished since decimal indicating device 40 is non-rotatively mounted as regards valve top piece 44 by means of locking devices 45-47. Consequently, wheel house 2 rotates, jointly with window 21 along the circumference of flange 41 and allows the digit which just at the moment is underlying on flange 41 to appear in window 21. When pin 51 on decimal indicating device 40 passes intermediate wheel 35, it enters into a cog space 56 and rotates exactly one graduation. This rotational movement is translated to full turn indicating device 28, which always with a cog 34 meshes with intermediate wheel 35. Said graduation corresponds to the angular or peripherical distance between two adjacent digits 30 on surface 29 and consequently full turn indicating device 28 is quickly and reliably fed to the following digit, which over a displacement distance which is as short as possible appears in its entirety. Due to the fact that the intermediate wheel is friction locked on pin 23 the indicating position of device 28 is maintained very reliably, the position stabilization also being enhanced since device 28 is subjected to friction locking forces due to the fact that holding lugs 27 are forcing flange 29 into the recess and against its walls.

## Claims

1. A wheel (1) for e.g. valves, designed to adjust a heating and cooling system etc., which comprises a house (2) having means to indicate the position of e.g. a valve body, to show full turns as well as portions of a turn, which means comprise two or several rotary elements (28;40), which interact with each other but each one of which provides its own indication, one element (40) thereof providing a rotary flexible decimal indication, whereas the other element (28) is influenced by said one element on one occasion per one completed turn to indicate one full turn, **characterized** in that said decimal indicating element (40) is designed to, via a driver (51) fastened to said element, once per completed turn influence with a graduation a radially outwardly positioned intermediate wheel (35), which in its turn is designed to thereby influence a radially inwardly positioned digit ring (28), which constitutes said other element, in order to indicate a higher or lower full turn.

2. A wheel according to claim 1, **characterized** in that the wheel house (2) , which suitably is produced by injection molding a plastic material or die-casting aluminum and which preferably is star-shaped with four blunt wings (3) and a substantially circular-cylindrical casing (4), which connects the bases of said wings, in that the wings and the casing extend axially from the face (5) of the house to its rear side (6), which is open and in that the interior of the casing and the wings is hollow.

3. A wheel according to claim 1 or 2, **characterized** in that on the face (5) of the house there suitably are use symbols (7), which were stamped, when the wheel was produced, as well as a central hole (8), e.g. a recess (9), designed to recieve a marking plate (10), which by means of a pin (11) is fastened in spindle screw (12) through friction locking in a hole (13) in the screw head (14) and in that also said pin (11) is provided with an axially through hole (55), designed to recieve a tool, by means of which the valve can be preliminarily adjusted without disassembly.

4. A wheel according to any of claims 1-3, **characterized** in that the central part of the wheel concentrically is surrounded by a hub (15), which in axial direction is somewhat shorter than the wings and the casing and is provided with an inner grooving or the like all around (16), which matches a corresponding outer grooving or the like (17) on a spindle end (18) in order to prevent a relative rotation between these parts and/or in that between the base of awing or the hub (15) in the face of the wheel house an axially through recess (19) is made, which is subdivided into a window (20), designed to indicate a full turn and a window (21) designed for portions of a turn and in that said recess preferably is T-shaped, the vertical portion thereof constituting one of the windows (20) and the cross portion thereof constituting the other window (21), in which an indication of a larger measuring range is required.

5. A wheel according to claim 4, **characterized** in that the wing base, which is radially connected to said recess (19), is not like the rest of the wing bases delimited by an arc-shaped casing portion, but the casing is within this area introduced into said wing in order to substantially follow the wing walls roughly parallelly at a distance and then form an approximately quarter-circle (22) with an axial pin (23) as a center of curvature, which axial pin projects outwards from the rear side of the face of the house from an area adjacent the projected circular continuation of the casing and has a length, which roughly corresponds to half the length of the casing.

6. A wheel according to claim 4, **characterized** in that in the bottom surface (24) of the area, which is surrounded by the casing, a recess (25) is concentrically made around the hub (15), which recess leaves a narrow shoulder (26) close to the casing, in that from the free edge, which delimits the shoulder laterally e.g. three holding lugs or the like (27), arranged at the same mutual angular distance, project into the recess and are designed to retain the digit ring (28), which is mounted in the recess and is so narrow, that it solely in radial direction covers said one window (20), in that the surface (29), which is exposed to this window, is provided with digits (30) in the circumferential direction of the ring, which correspond to the number of turns, which are to be indicated, and in that said surface (29) at the inner edge suitably is delimited by means of an axially projecting spacer edge all around (31), the purpose of which is to space the surface from the bottom of the recess and to prevent/counteract in this way that said digits are worn off.

7. A wheel according to claim 6, **characterized** in that on the other side of the digit ring (28) a ring (32), which suitably is spaced somewhat from the inner edge and substantially from the outer edge, projects in axial direction, from which ring in a location, which suitably corresponds to the 0-adjustement, a positioning shoulder (33) projects radially inwards, by means of which the ring can be allowed, when the ring is mounted in the wheel house, to occupy the required starting position, in that radially outwards from the ring (32) cogs (34) project with even spaces therebetween, which cogs suitably are roughly cylinder-shaped in axial direction with a uniform transition into the outer ring portion and a termination in axial direction at the level of the free axial end of the ring (32) and in that said cogs in radial direction through approximately a quarter of their circumference are uniformly connected to the ring (32).

8. A wheel according to claim 7, **characterized** in that said intermediate wheel (35) interacts with the digit ring (28) and is rotatively mounted on the axial pin (23) and is supported with its zone of contact on the outer portion of the digit ring, in that the intermediate wheel has ashape, which is complementary to a large extent as regards the digit ring, mainly because the shape of the spaces (56) between adjacent cogs (36) are inner half-cylinders (58) with straight wall extensions (57) outwards and because the periphery (59) of the wheel substantially follows a cylinder surface, in that the intermediate wheel cogs (36) suitably are provided with central axially through holes (60), in that the intermediate wheel is provided with a concentric inner substantially cylinder ring-shaped hole (37), leaving a bottom (61) at one axial end of the wheel around a pin hole (38), and in that from the inner edge of said bottom (38) two opposite holding shoulders (39) project axially outwards into the hole (37) and at least at their free ends have a smaller mutual distance from each other than the pin diameter in order to attain a friction locking of the intermediate wheel on the pin.

9. A wheel according to claim 8, **characterized** in that said decimal ring (40) abuts the bottom surface (24) inside the digit ring with a flange (41), which projects in axial direction from one end of a guide cylinder (42), which in axial direction is connected to a concentric sleeve (43) with a larger diameter, which sleeve is designed to be slipped on a projecting top piece (44) of the valve and is secured on it against a relative rotation, because it is provided with a tongued and grooved-like projection (45) in radial direction, which projection preferably has axial springs (47), which project radially inwards from the web (46) of the projection, in order to recieve tolerances, in that the transition area between the guide cylinder and the sleeve coincides with a flange (48), which in radial direction projects above the sleeve and the projection and suitably is surrounded by a resilient collar (49), which extends with an angle of approximately 15° in relation to the longitudinal axis and opens outwards from the flange, which in its mounted position is recessed within the casing space, and in that the collar is designed to resiliently snap in under a few locking shoulders (50) at the inner side of the free end of the casing and in this way fasten against each other all the main parts of the wheel, which comprise the house, the digit ring , the intermediate wheel and the decimal ring.

10. A wheel according to claim 9, **characterized** in that from a location close to the periphery of the flange (41) said driver pin (51) projects from the flange in axial direction and is designed to mesh with a cog space of the intermediate wheel, when it is passing the cog space, and in this way to rotate this wheel one graduation, which rotational movement is designed to be translated to the digit ring, which is rotated a corresponding graduation in order to indicate a higher or lower full turn, in that the flange (41) on its free end surface is provided with a numbering all around, comprising e.g. digits 0-9, corresponding to ten decimals of a full turn, in that the flange 41 in a similar way as the digit ring is provided with a preferably outer spacer ring (52) all around in order to prevent/counteract that the indicating surface will be worn off, and in that the open area between the casing and the collar outside the intermediate wheel is covered by a shape-complementary protection element (53), which with e.g. a small flange (54) as an insertion delimitation is designed to contact the collar.

## Patentansprüche

1. Rad (1) für beispielsweise Ventile zum Regulieren von Heiz- und Kühlsystemen etc., welche Ventile ein Gehäuse (2) besitzen mit Mitteln zur Lagenanzeige von z.B. einem Ventilkörper mit Anzeige von sowohl vollen Umdrehungen als auch Teilen einer Umdrehung, welche Mittel zwei oder mehr miteinander zusammenwirkende rotierende Organe (28; 40) zur jeweiligen Anzeige besitzen, von welchen Organen eines (40) für eine umdrehungsfolgsame Dezimalanzeige vorgesehen ist, während das andere (28) von erstgenanntem Organ einmal pro vollendete Umdrehung beeinflussbar ist, um eine volle Umdrehung anzuzeigen, **dadurch gekennzeichnet, dass** das Dezimalanzeigeorgan (40) dazu vorgesehen ist, über einen mit diesem fest verbundenen Mitbringer (51) einmal pro vollendete Umdrehung mit einer Teilung ein radial ausserhalb angeordnetes Zwischenrad (35) zu beeinflussen, welches seinerseits dazu vorgesehen ist, hierbei auf einen radial innerhalb angeordneten Zifferring (28) einzuwirken, welcher das genannte andere Organ darstellt, um eine höhere oder niedrigere volle Umdrehung anzuzeigen.

2. Rad nach Anspruch 1, **dadurch gekennzeichnet, dass** das Radgehäuse (2), welches bevorzugt durch Formspritzen aus Kunststoff oder Pressgiessen aus Aluminium hergestellt ist, und welches vorzugsweise die Form eines Kreuzes mit vier stumpf ausgeführten Flügeln (3) hat und einen deren Ansätze verbindenden, im wesentlichen kreiszylindrischen Mantel (4) aufweist, dass die Flügel und der Mantel sich in axialer Richtung von der Vorderseite (5) des Gehäuses zu dessen Rückseite (6) erstrecken, welche offen ist, und dass das Innere des Mantels und der Flügel hohl ausgeführt ist.

3. Rad nach Anspruch 1 oder 2, **dadurch gekennzeichnet, dass** auf der Vorderseite (5) des Gehäuses vorzugsweise im Zusammenhang mit der Herstellung eingeprägte Anwendungssymbole (7) sowie um eine Zentrumbohrung (8) herum beispielsweise eine Versenkung (9) zur Aufnahme einer Kennzeichnungsplatte (10) angeordnet sind, welche Platte mit einem Zapfen (11) in einer Spindelschraube (12) durch Reibungsarretierung in einer Bohrung (13) im Schraubenkopf (14) festgesetzt ist, und dass auch der Zapfen (11) mit einer axial durchgehenden Bohrung (55) zur Einführung eines Werkzeuges versehen ist, mittels welchem das Ventil ohne Auseinandernahme voreinstellbar ist.

4. Rad nach wenigstens einem der Ansprüche 1-3, **dadurch gekennzeichnet, dass** die Mitte des Rades konzentrisch von einer Nabe (15) umgeben ist, welche in axialer Richtung vorzugsweise etwas kürzer ist als die Flügel und der Mantel und mit einer umlaufenden inneren Riffelung od.dgl. (16) versehen ist, welche in eine entsprechende äussere Riffelung od.dgl. (17) eines Spindelendes (18) eingreift, um Relativdrehungen zwischen diesen Teilen zu vermeiden, und/oder dass zwischen dem Ansatz eines Flügels und der Nabe (15) in der Vorderseite des Radgehäuses eine axial durchgehende Ausnehmung (19) angeordnet ist, welche aufgeteilt ist in ein Fenster (20) zur Anzeige von vollen Umdrehungen und ein Fenster (21) für Teile einer Umdrehung, und dass die Ausnehmung vorzugsweise die Form eines T:s hat, wobei der vertikale Balken das eine Fenster (20) und der Querbalken das andere Fenster (21) bildet, in welchem die Anzeige eines grösseren Messbereiches realisierbar ist.

5. Rad nach Anspruch 4, **dadurch gekennzeichnet, dass** der Flügelansatz in radialem Anschluss an die Ausnehmung (19) nicht wie die übrigen Flügelansätze von einem kreisbogenförmigen Mantelteil begrenzt ist, sondern dass der Mantel in diesem Bereich in genannten Flügel eingeführt ist, um zunächst den Flügelflanken etwa parallel und auf Abstand zu folgen, und alsdann etwa einen Viertelkreis (22) mit einem Achszapfen (23) als Krümmungszentrum zu bilden, welcher Achszapfen von der Hinterseite der Vorderseite des Gehäuses abragt von einem Bereich in der Nähe der imaginären kreisförmigen Fortsetzung des Mantels und eine Länge besitzt, welche etwa der halben Mantellänge entspricht.

6. Rad nach Anspruch 4, **dadurch gekennzeichnet, dass** in der Bodenfläche (24) des von dem Mantel eingeschlossenen Bereiches konzentrisch um die Nabe (15) herum eine Versenkung (25) angeordnet ist, welche einen schmalen Absatz (26) benachbart zum Mantel belässt, dass von der freien Kante, welche den Absatz in seitlicher Richtung begrenzt, in die Versenkung z.B. drei mit gleichem gegenseitigen Winkelabstand angeordnete Arretierwarzen od.dgl. (27) einragen, die dazu vorgesehen sind, den in die Versenkung eingeführten Zifferring (28) zurückzubehalten, welcher so schmal ist, dass er das genannte eine Fenster (20) nur in radialer Richtung abdeckt, dass die dem Fenster zugewandte Fläche (29) mit Ziffern (30) in Umfangsrichtung des Ringes versehen ist, welche Ziffern der anzuzeigenden Umdrehungsanzahl entsprechen, und dass die genannte Fläche (29) an der Innenkante vorzugsweise von einer umlaufenden, axial vorstehenden Distanzkante (31) begrenzt ist, deren Aufgabe es ist, die Fläche vom Boden der Versenkung zu distanzieren und auf diese Weise eine Abnutzung genannter Ziffern zu verhindern bzw. einer solchen entgegenzuwirken.

7. Rad nach Anspruch 6, **dadurch gekennzeichnet, dass** auf der anderen Seite des Zifferringes (28) in radialer Richtung ein vorzugsweise etwas von der Innenkante und bedeutend von der Aussenkante distanzierter Ring (32) absteht, von dem an einer Stelle, vorzugsweise entsprechend der Nulleinstellung, ein Positionierabsatz (33) radial nach innen absteht, mit Hilfe von welchem der Ring dazu gebracht werden kann, beim Montieren des Ringes im Radgehäuse die gewünschte Ausgangslage einzunehmen, dass radial nach aussen vom Ring (32) mit gleichförmigen Zwischenräumen angeordnete Zähne (34) abstehen, welche vorzugsweise etwa Zylinderform in axialer Richtung besitzen mit homogenem Übergang in den äusseren Ringteil und Abschluss in axialer Richtung in Höhe mit dem freien axialen Ende des Ringes (32) und dass die Zähne in radialer Richtung über etwa ein Viertel ihres Umfanges mit dem Ring (32) homogen vereinigt sind.

8. Rad nach Anspruch 7, **dadurch gekennzeichnet, dass** der Zifferring (28) mit genanntem Zwischenrad (35) zusammenwirkt, welches auf dem Achszapfen (23) rotierbar gelagert ist und mit dem Eingriffbereich auf dem äusseren Teil des Zifferringes ruht, dass das Zwischenrad eine dem Zifferring weitgehend entsprechende komplementäre Form besitzt, insbesondere dadurch dass die Zwischenräume (56) zwischen benachbarten Zähnen (36) die Form von inneren Halbzylindern (58) mit geraden Flankenverlängerungen (57) nach aussen haben und dadurch, dass die Peripherie (59) des Rades im wesentlichen einer Zylinderfläche folgt, dass die Zwischenradzähne (36) vorzugsweise mit zentralen, axial durchgehenden Hohlräumen (60) versehen sind, dass das Zwischenrad mit einem konzentrischen inneren, im wesentlichen zylinderringförmigen Hohlraum (37) versehen ist, welcher einen Boden (61) an einem axialen Ende des Rades um eine Zapfenbohrung (38) herum belässt, und dass von der Innenkante genannten Bodens (38) axial in den Hohlraum (37) zwei entgegengesetzte Arretierabsätze (39) einragen, welche wenigstens an ihren freien Enden einen geringeren gegenseitigen Abstand besitzen als der Zapfendurchmesser zwecks Reibungsarretierung des Zwischenrades auf dem Zapfen.

9. Rad nach Anspruch 8, **dadurch gekennzeichnet, dass** gegen die Bodenfläche (24) innerhalb des Zifferringes genannter Dezimalring (40) mit einem Flansch (41) anliegt, welcher in radialer Richtung von einem Ende eines Steuerzylinders (42) abragt, welcher in axialer Richtung an eine konzentrische Muffe (43) mit grösserem Durchmesser anschliesst, welche Muffe dazu vorgesehen ist, über ein vorragendes Ventiloberteil (44) gestreift und auf diesem gegen Relativdrehung dadurch gesichert zu werden, in dem sie in radialer Richtung mit einem federähnlichen Vorsprung (45) versehen ist, welcher Vorsprung vorzugsweise axiale, vom Steg (46) des Vorsprunges radial nach innen ragende Federn (47) zur Aufnahme von Toleranzen besitzt, dass der Übergangsbereich zwischen dem Steuerzylinder und der Muffe mit einem Flansch (48) zusammenfällt, welcher in radialer Richtung über die Muffe und den Vorsprung hinausragt und vorzugsweise von einem federnden Kragen (49) umgeben ist, welcher einen Winkel von vorzugsweise etwa 15° zur Längsachse einnimmt und sich nach aussen von dem in montierter Lage innerhalb des Mantelraumes versenkten Flansch öffnet, und dass der Kragen dazu vorgesehen ist, federnd unter einige Arretierabsätze (50) an der Innenseite des freien Mantelendes einzuschnappen und auf diese Weise alle Hauptteile des Rades bestehend aus dem Gehäuse, dem Zifferring, dem Zwischenrad und dem Dezimalring aneinander zu arretieren.

10. Rad nach Anspruch 9, **dadurch gekennzeichnet, dass** von einer Stelle nahe der Peripherie des Flansches (41) von diesem in axialer Richtung genannter Mitbringerzapfen (41) abragt, der dazu vorgesehen ist, in eine Zahnlücke des Zwischenrades bei Passieren von diesem einzugreifen und hierbei dieses Rad um eine Teilung zu drehen, welche Rotationsbewegung dazu vorgesehen ist, auf den Zifferring übertragen zu werden, welcher um eine entsprechende Teilung gedreht wird, um eine höhere oder niedrigere volle Umdrehung anzuzeigen, dass der Flansch (41) an seiner freien Endfläche mit einer umlaufenden Numerierung versehen ist bestehend aus z.B. den Zahlen 0-9 entsprechend zehn Dezimalen einer vollen Umdrehung, dass der Flansch (41) auf entsprechende Weise wie der Zifferring mit einem vorzugsweise äusseren umlaufenden Distanzring (52) versehen ist, um Abnutzung der Anzeigefläche zu verhindern bzw. dieser entgegenzuwirken, und dass der offene Bereich zwischen Mantel und Kragen ausserhalb des Zwischenrades von einem formkomplementären Schutzorgan (43) abgedeckt ist, welches mit z.B. einem kleinen Flansch (54) als Einschiebebegrenzung zur Anlage gegen den Kragen vorgesehen ist.

## Revendications

1. Roue (1), par exemple pour des clapets conçus pour régler un système de chauffage et de refroidissement, etc., qui comprend un logement (2) comportant des moyens pour repérer la position par exemple d'un corps de clapet dans le but de représenter des tours complets, ainsi que des portions d'un tour, lesdits moyens comprenant deux éléments rotatifs ou plus (28; 40) qui agissent réciproquement l'un avec l'autre, chacun fournissant néanmoins son propre repère, le premier (40) de ces éléments procurant un repère décimal flexible en rotation, tandis que l'autre élément (28) est influencé par ledit premier élément à chaque fois qu'un tour a été accompli pour repérer un tour complet, caractérisée en ce que ledit élément de repère décimal (40) est conçu pour, via un dispositif d'entraînement (51) fixé audit élément, une fois par tour accompli, influencer à l'aide d'une graduation une roue intermédiaire (35) positionnée à l'extérieur en direction radiale; qui est conçue à son tour pour influencer un anneau numérique (28) positionné à l'intérieur en direction radiale, qui constitue ledit autre élément, dans le but de repérer une valeur supérieure ou inférieure à un tour complet.

2. Roue selon la revendication 1, caractérisée en ce que le logement de roue (2) est fabriqué de manière appropriée par moulage par injection d'une matière plastique ou par coulée d'aluminium sous pression, possédant de préférence une configuration en étoile munie de quatre ailes émoussées (3) et comprenant un boîtier (4) essentiellement cylindrique circulaire qui relie les bases desdites ailes, en ce que les ailes et le boîtier s'étendent en direction axiale depuis la face (5) du logement jusqu'à son côté arrière (6) qui est ouvert et en ce que l'intérieur du logement et des ailes est creux.

3. Roue selon la revendication 1 ou 2, caractérisée en ce que, sur la face (5) du logement, sont disposés de manière appropriée des symboles d'utilisation (7) qui ont été estampés lors de la fabrication de la roue, ainsi qu'un trou central (8), par exemple un évidement (9), conçu pour recevoir une plaque de marquage (10) qui, au moyen d'une cheville (11), est fixée dans une vis de broche (12) par blocage par friction dans un trou (13) pratiqué dans la tête de vis (14), et en ce que également ladite cheville (11) est munie d'un trou traversant (55) en direction axiale, conçu pour recevoir un outil, au moyen duquel le clapet peut être réglé au préalable sans être démonté.

4. Roue selon l'une quelconque des revendications 1-3, caractérisée en ce que la partie centrale de la roue, en direction concentrique, est entourée par un moyeu (15) qui, en direction axiale, est légèrement plus court que les ailes et que le boîtier, et est muni d'une rainure interne ou analogues s'étendant sur toute sa périphérie (16), qui épouse la forme d'une rainure externe correspondante ou analogues (17) pratiquée sur une extrémité de broche (18) dans le but d'empêcher une rotation relative entre ces parties, et/ou en ce que, entre la base d'une aile et le moyeu (15), on pratique un évidement traversant (19) en direction axiale dans la face du logement de roue, qui est subdivisé en une fenêtre (20) conçue pour repérer un tour complet et en une fenêtre (21) conçue pour des portions d'un tour, et en ce que ledit évidement possède de préférence une configuration en T dont la portion verticale constitue une fenêtre (20) et dont la portion transversale constitue l'autre fenêtre (21) dans laquelle un repère à domaine de mesure supérieur est requis.

5. Roue selon la revendication 4, caractérisée en ce que la base de l'aile, qui est reliée en direction radiale audit évidement (19), n'est pas égale au reste des bases d'aile délimitées par une portion de boîtier de forme arquée, le boîtier étant, dans cette zone, introduit dans ladite aile dans le but de suivre essentiellement les parois de l'aile de manière grosso modo parallèle, à distance, et de former ainsi approximativement un quart de cercle (22) avec une cheville axiale (23) au centre de la courbure, ladite cheville axiale faisant saillie vers l'extérieur par rapport au côté arrière de la face de logement à partir d'une zone adjacente au prolongement circulaire de projection et dont la longueur correspond grosso modo à la moitié de la longueur du boîtier.

6. Roue selon la revendication 4, caractérisée en ce que, dans la surface inférieure (24) de la zone qui est entourée par le boîtier, on pratique un évidement (25) en position concentrique autour du moyeu (15), ledit évidement laissant subsister un épaulement étroit (26) proche du boîtier, et en ce que, à partir du bord libre qui délimite l'épaulement en direction latérale, par exemple trois languettes de soutien ou analogues (27), arrangées à la même distance angulaire l'une par rapport à l'autre, font saillie dans l'évidement et sont destinées à retenir l'anneau numérique (28) qui est monté dans l'évidement et dont l'étroitesse est telle qu'il recouvre ladite première fenêtre (20) seulement en direction radiale, en ce que la surface (29) qui est exposée à cette fenêtre est munie de chiffres (30) dans la direction circonférentielle de l'anneau, qui correspondent au nombre de tours qui doivent être repérés, et en ce que ladite surface (29) au bord interne est délimitée de manière appropriée au moyen d'un bord d'écartement périphérique (31) faisant saillie en direction axiale, dont le but est d'écarter la surface du fond de l'évidement et d'empêcher de cette manière l'usure desdits chiffres ou de contrecarrer cette dernière.

7. Roue selon la revendication 6, caractérisée en ce que, sur l'autre côté de l'anneau numérique (28), un anneau (32) qui, de manière appropriée, est espacé légèrement du bord interne et essentiellement du bord externe, fait saillie en direction axiale, anneau à partir duquel, à un endroit qui correspond de manière appropriée au réglage zéro, un épaulement de positionnement (33) fait saillie vers l'intérieur en direction radiale, au moyen duquel l'anneau est à même, lorsque l'anneau est monté dans le logement de roue, d'occuper la position de départ requise, en ce que, à l'extérieur de l'anneau (32) en direction radiale, font saillie des dents (34) possédant entre elles des espaces égaux, lesdites dents possédant de manière appropriée une configuration grosso modo cylindrique en direction axiale, avec une transition uniforme à la portion externe de l'anneau et une terminaison en direction axiale au niveau de l'extrémité axiale libre de l'anneau (32), et en ce que lesdites dents, en direction radiale, sur approximativement 1/4 de leur circonférence, sont reliées de manière uniforme à l'anneau (32).

8. Roue selon la revendication 7, caractérisée en ce que ladite roue intermédiaire (35) agit réciproquement avec l'anneau numérique (28) et est montée en rotation sur la cheville axiale (23) en étant supportée avec sa zone de contact sur la portion externe de l'anneau numérique, en ce que la roue intermédiaire possède une configuration qui épouse, dans une large mesure, celle de l'anneau numérique principalement par le fait que la forme des espaces (56) ménagés entre des dents adjacentes (36) correspond à celle de demi-cylindres internes (58) comportant des prolongements de parois rectilignes (57) à l'extérieur et par le fait que la périphérie (59) de la roue suit essentiellement une surface cylindrique, en ce que les dents (36) de la roue intermédiaire sont munies de manière appropriée de trous traversants (60) disposés en position centrale et s'étendant en direction axiale, en ce que la roue intermédiaire est munie d'un trou interne concentrique (37) possédant essentiellement une forme d'anneau cylindrique en laissant un fond (61) à une extrémité axiale de la roue autour d'un trou d'aiguille (38), et en ce que, à partir du bord interne dudit fond (61), deux épaulements de support opposés (39) font saillie en direction axiale vers l'extérieur dans le trou (37) et possèdent, au moins à leurs extrémités libres, une distance mutuelle l'une par rapport à l'autre inférieure au diamètre de la cheville pour obtenir un blocage par friction de la roue intermédiaire sur la cheville.

9. Roue selon la revendication 8, caractérisée en ce que ledit anneau décimal (40) vient buter contre la surface inférieure (24) à l'intérieur de l'anneau numérique, avec une bride (41) qui fait saillie en direction axiale à partir d'une extrémité d'un cylindre de guidage (42) qui, en direction axiale, est relié à un manchon concentrique (43) possédant un plus grand diamètre, ledit manchon étant conçu pour glisser sur une pièce supérieure saillante (44) du clapet et étant fixé à cette pièce à l'encontre d'une rotation relative par le fait qu'il est muni, en direction radiale, d'une saillie (45) en forme de languette rainurée, ladite saillie comportant de préférence des ressorts axiaux (47) qui font saillie vers l'intérieur en direction radiale par rapport à l'âme (46) de la saillie dans le but d'accepter des tolérances, en ce que la zone de transition entre le cylindre de guidage et le manchon coïncide avec une bride (48) qui, en direction radiale, fait saillie au-dessus du manchon et de la saillie, et qui est entourée, de manière appropriée, d'une bague résiliente (49) qui s'étend en formant un angle d'approximativement 15° par rapport à l'axe longitudinal et qui s'ouvre vers l'extérieur par rapport à la bride qui, à l'état monté, procure un gradin dans l'espace du boîtier, et en ce que la bague est conçue pour s'encliqueter par résilience en dessous d'un petit nombre d'épaulements de verrouillage (50) sur le côté interne de l'extrémité libre du boîtier et, de cette manière, fixer l'une par rapport à l'autre toutes les parties principales de la roue qui comprennent le logement, l'anneau numérique, la roue intermédiaire et l'anneau décimal.

10. Roue selon la revendication 9, caractérisée en ce que, à partir d'un endroit proche de la périphérie de la bride (41), ladite cheville d'entraînement (51) fait saillie par rapport à la bride en direction axiale et est conçue pour s'engrener avec un espace ménagé entre des dents de la roue intermédiaire, lorsqu'elle passe devant les espaces ménagés entre les dents, et pour faire tourner de cette manière cette roue à concurrence d'une graduation, ledit mouvement de rotation étant conçu pour être transmis par translation à l'anneau numérique qui tourne d'une graduation correspondante dans le but de repérer une valeur supérieure ou inférieure à un tour complet, en ce que la bride (41), sur sa surface terminale libre, est munie d'une numérotation sur toute sa périphérie comprenant par exemple les chiffres 0-9 correspondant à 10 décimales d'un tour complet, en ce que la bride (41), d'une manière similaire à l'anneau numérique, est munie d'un anneau d'écartement (52) de préférence externe sur sa périphérie dans le but d'empêcher l'usure de la surface repère et/ou de s'y opposer, et en ce que l'espace ouvert entre le boîtier et la bague à l'extérieur de la roue intermédiaire est recouvert d'un élément de protection (53) épousant la forme, avec lequel par exemple une petite bride (54) est conçue, sous forme d'une délimitation d'insertion, pour venir se mettre en contact avec la bague.
